(19) Europäisches Patentamt
European Patent Office
Office européen des brevets

(11) EP 1 544 877 A1

(12) EUROPEAN PATENT APPLICATION
published in accordance with Art. 158(3) EPC

(43) Date of publication:
**22.06.2005 Bulletin 2005/25**

(21) Application number: **03792722.5**

(22) Date of filing: **19.08.2003**

(51) Int Cl.[7]: **H01G 9/035**

(86) International application number:
**PCT/JP2003/010475**

(87) International publication number:
**WO 2004/019355 (04.03.2004 Gazette 2004/10)**

(84) Designated Contracting States:
**AT BE BG CH CY CZ DE DK EE ES FI FR GB GR HU IE IT LI LU MC NL PT RO SE SI SK TR**

(30) Priority: **22.08.2002 JP 2002241288**
**22.07.2003 JP 2003199716**

(71) Applicant: **SANYO CHEMICAL INDUSTRIES, LTD.**
**Kyoto-shi, Kyoto 605-0995 (JP)**

(72) Inventors:
- **Sasada, Shinya, c/o Sanyo Chemical Ind., LTD.**
**Kyoto-shi, Kyoto 605-0995 (JP)**
- **Kobayashi, Yukiya,**
**c/o Sanyo Chemical Ind., Ltd.**
**Kyoto-shi, Kyoto 605-0995 (JP)**
- **Taguchi, Shinya, c/o Sanyo Chemical Ind. Ltd.**
**Kyoto-shi, Kyoto 605-0995 (JP)**
- **Jogo, Shunsuke, c/o Sanyo Chemical Ind. Ltd.**
**Kyoto-shi, Kyoto605-0995 (JP)**

(74) Representative: **Behnisch, Werner, Dr.**
**Reinhard-Skuhra-Weise**
**Friedrichstrasse 31**
**80801 München (DE)**

# (54) ELECTROLYTIC SOLUTION

(57) An electrolytic solution for electrolytic capacitors is disclosed which allows to generate higher spark voltages without inducing decrease in the specific electric conductivity. The electrolytic solution comprises an organic polar solvent (C) and further comprises a carboxylic acid (A0) and/or its salt (B) dissolved in the solvent, wherein the carboxylate anion (A) is **characterized in that** the energy of formation in water of its ionic complex (D) with aluminum ion is not more than -250 kcal/mol and not less than -500 kcal/mol as calculated by the MM3/PM3 method of the CAChe system.

EP 1 544 877 A1

## Description

TECHNICAL FIELD

The present invention relates to an electrolytic solution, more specifically to an electrolytic solution to be used in electrolytic capacitors.

BACKGROUND ART

Along with progression of space-saving around installed capacitors in recent years, there has been arising need for an electrolytic solution capable of generating high spark voltages that will enable down-sizing of capacitors. For this, an electrolytic solution is proposed in which is utilized a polycarboxylic acid having two or more secondary and/or tertiary carboxyl groups in total and whose molecular weight is not less than 260 (see, e.g., Japanese Patent Application Publication No. H1-103821).

In order to increase spark voltages, either of the following two means has been employed so far, i.e., increasing the molecular weight, thus increasing the van der Waals volume, of the anionic components in the electrolytic solution, or employing additives such as ethylene glycol. However, by either of these means, decrease in specific electric conductivity occurs inversely proportional to the increase in spark voltages.

DISCLOSURE OF INVENTION

The purpose of the present invention is to obtain an electrolytic solution that enables generation of high spark voltages without inducing a decrease in the specific electric conductivity.

In general, spark voltage strongly correlates to the van der Waals volume of the anionic ingredients of an electrolytic solution: the greater the van der Waals volume, the higher the spark voltage. On the other hand, specific electric conductivity is apt to decrease when the van der Waals volume of an anionic ingredient increases. However, depending on their molecular structures, there are some cases where discrepancy in spark voltages exists between molecules comparable to each other in terms of van der Waals volume and specific electric conductivity. The present inventors herein assumed the presence of a second factor, apart from the van der Waals volume of an anionic ingredient, the factor contributing to spark voltages without adversely affecting specific electric conductivity, and thus set to a study. As a result, the factor was pinned down to be the energy of formation in water of the ionic complex from the carboxylate anion and aluminum ion, which energy may be calculated by the MM3/MP3 method of the CAChe system, and this lead to the present invention. Thus, the present invention is an electrolytic solution comprising an organic polar solvent (C) and further comprising a carboxylic acid (A0) and/or a carboxylate salt (B), wherein the carboxylate anion (A) is one with which the energy of formation in water of the ionic complex (D) with aluminum ion is not more than -250 kcal/mol and not less than -500 kcal/mol as calculated by the MM3/PM3 method of the CAChe system.

Using the electrolytic solution for electrolytic capacitors according to the present invention, higher spark voltages can be generated without inducing a decrease in the specific electric conductivity.

BEST MODE FOR CARRYING OUT THE INVENTION

The carboxylate anion (A) derived from the carboxylic acid (A0) and/or the carboxylate salt (B), components of the electrolytic solution of the present invention, is one with which the energy of formation in water of the coordination complex (D) with aluminum ion is usually not more than -250 kcal/mol, preferably not more than -300 kcal/mol, more preferably not more than - 350 kcal/mol, and usually not less than - 500 kcal/mol, preferably not less than -450 kcal/mol, as calculated by the MM3/PM3 method of the CAChe system.

When the energy of formation is above -250 kcal/mol or below -500 kcal/mol, the effect of increasing spark voltages turns small. It is the smallness of the energy of formation of the ionic complex (D) of the carboxylate anion (A) with aluminum ion that enables higher spark voltages without requiring increase in the van der Waals volume of the carboxylate anion, thus giving an electrolytic solution simultaneously having high specific electric conductivity and high spark voltage. Though the reason is not clear, the increase in spark voltage is considered to be due to suppressed diffusion of aluminum ion into the electrolytic solution because of the formation of the ionic complex (D), and to efficient restoration of anodic oxidation-formed coating films from partial damage.

The energy of formation may be calculated using software produced by Fujitsu Limited, "CAChe4.4", by inputting the structure of D and selecting the MM3/PM3 method as the method for calculation.

As for the carboxylate anion (A), dicarboxylate anion is preferred, for it more readily coordinates with aluminum ion and thus leads to reduction of the energy of formation.

The carboxylate anion (A) employed in the present invention is one that is characterized in that the energy

of formation in water of the ionic complex (D) it forms with aluminum ion is not more than -250 kcal/mol as calculated by the MM3/PM3 method of the CAChe system.

In the present invention, "aluminum ion" means the trivalent cation $Al^{3+}$.

While the van der Waals volume of the carboxylate anion (A) employed may be in a proper range corresponding to required spark voltages and specific electric conductivities, from a viewpoint of obtaining an electrolytic solution suitable for capacitors of moderate/high voltage classes over 100 V, the volume is preferably not less than 190 cubic angstroms, more preferably not less than 250 cubic angstroms, and preferably not more than 500 cubic angstroms, more preferably not more than 400 cubic angstroms. Herein, the van der Waals volume, which may be calculated using the CAChe system, means the volume of a solid defined by connecting the points at which the same probability density of electron is exhibited in the three-dimensional space and having an energy of 18 kcal/mol.

The modulus of the difference between the solubility parameter (hereinafter abbreviated to "SP value") for the carboxylate anion (A) as calculated by Fedors method and the SP value for the organic polar solvent (C) is preferably not less than 4, and preferably not more than 9, more preferably not more than 8, from a viewpoint of the solubility of the electrolyte in the solvent.

The SP value for the carboxylate anion (A) as calculated by Fedors method is the value calculated by the method described in Polymer Engineering and Science, Vol. 14, No. 2, p.147~154(1974). Namely, SP value δ (at 25 °C) is given by the following formula:

$$\delta = \left[ \frac{\Delta E}{V} \right]^{1/2} = \left[ \frac{\sum_i \Delta e_i}{\sum_i \Delta v_i} \right]^{1/2}$$

where ΔE and V: cohesive energy density and molar volume, respectively,
$\Delta e_i$ and $\Delta v_i$: energy of vaporization and molar volume, respectively, for an atom or a group of atoms,
provided that, for resins having Tg >25 °C, the following values are added to the molar volume:

$$\text{if } n < 3, \text{ then } +\Delta v_i = 4n$$

$$\text{if } n \geqq 3, \text{ then } +\Delta v_i = 2n$$

n: the number of the atoms forming the principal chain of the smallest repeating unit building up the polymer.

As for the carboxylate anion (A) employed in the present invention, the maximal electron density of the highest occupied orbital of the molecule (A), as calculated by the MM3/PM3 method of the CAChe system, is preferably not less than zero, preferably not more than 0.5, and more preferably not more than 0.3, from a viewpoint of stability in terms of the breakage of the molecule upon application of voltage and exposure to thermal history.

Within this range, the carboxylate anion (A) resists molecular breakage that could be induced by electrical and thermal energy.

As for the carboxylate anion (A), secondary dicarboxylate dianion is more preferred from a viewpoint that it can suppress esterification reaction with the solvent and its decline in the specific electric conductivity is small at high temperatures (100 °C - 180 °C). This is due to increased steric hindrance in secondary dicarboxylic acid because of a substituent at the α-position relative to the carboxyl group.

The carboxylate anion (A) is one that is represented by the following general formula (1)(A1) or one that is represented by the following general formula (2)(A2). Among (A1) and (A2), those that are preferred are a dicarboxylate dianion having an ether bond, a dicarboxylate dianion having a hydroxyl group, and a dicarboxylate dianion having asymmetrical side chains.

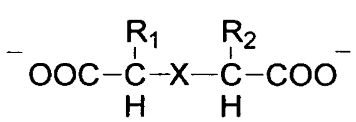

(1)

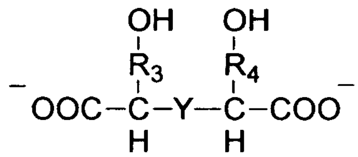

(2)

wherein X is a linear or branched, saturated or unsaturated, divalent hydrocarbon group having 1 to 12 carbon atoms, and, from a viewpoint of simultaneous achievement of high specific electric conductivity and high spark voltage, the number of carbon atoms is preferably not less than 2, more preferably not less than 4, and preferably not more than 10, and more preferably not more than 8. X may have an ether bond. Examples of X include such groups as ethylene, propylene, isopropylene, butylene, isobutylene, pentylene, hexylene, heptylene, octylene, a group represented by $-O[CH_2]_n-O-$ (n is 1-10), a group represented by $-OC_6H_4-O-$, and polyoxyalkylene (polymerization degree of 2-4; ethylene or isopropylene for the alkylene). Among them, particularly preferred are hexylene, heptylene, octylene and polyoxyalkylene groups.

$R_1$ and $R_2$ are linear or branched, saturated or unsaturated, monovalent hydrocarbon groups having 2 to 10 carbon atoms wherein $R_1$ and $R_2$ are different from each other, or $R_1$ and $R_2$ are monovalent hydrocarbon groups having an ether bond and having 2 to 10 carbon atoms wherein $R_1$ and $R_2$ may be the same or different from each other. Examples of $R_1$ and $R_2$ include such groups as ethyl, propyl, isopropyl, butyl, isobutyl, pentyl, hexyl, heptyl, octyl, 2-ethylhexyl, methylpolyoxyalkylene (polymerization degree of 2-4; ethylene or isopropylene for the alkylene), and phenylpolyoxyalkylene (polymerization degree of 2-4; ethylene or isopropylene for the alkylene). Among those, particularly preferred are isopropyl, hexyl, heptyl, octyl, and 2-ethylhexyl groups where $R_1$ and $R_2$ are different with each other, or methylpolyoxyalkylene and phenylpolyoxyalkylene, from a viewpoint of simultaneous improvement of solubility to solvents and withstand voltage.

Y is a linear or branched, saturated or unsaturated, divalent hydrocarbon group having 1 to 12 carbon atoms, and, from a viewpoint of simultaneous achievement of high specific electric conductivity and high spark voltage, the number of carbon atoms is preferably not less than 2, more preferably not less than 4, and preferably not more than 10, more preferably not more than 8, and an ether bond may be included. Examples of Y include such groups as ethylene, propylene, isopropylene, butylene, isobutylene, pentylene, hexylene, heptylene, octylene, a group represented by $-O[CH_2CH_2]_n-O-$ (n is 1-5), a group represented by $-O[C_6H_6]-O-$, and polyoxyalkylene (polymerization degree of 2-4; ethylene or isopropylene for the alkylene). Among those, particularly preferred are hexylene, heptylene, octylene, and polyoxyalkylene groups.

$R_3$ and $R_4$ are linear or branched, saturated or unsaturated, divalent hydrocarbon groups having 1 to 10 carbon atoms, and may have an ether bond. $R_3$ and $R_4$ may be the same or different from each other. Examples of $R_3$ and $R_4$ include such groups as ethylene, propylene, isopropylene, butylene, isobutylene, pentylene, hexylene, heptylene, octylene, a group represented by $-[OCH_2CH_2]_n-$ (n is 1-4), and a group represented by $-[OCH_2CH(CH_3)]_n-$ (n is 1-3). Particularly preferred are hexylene, heptylene, and octylene groups.

Examples of methods for preparing the aforementioned carboxylate anion (A1) include; a method in which, applying the technique described in the Journal of Organic Chemistry, 24,54(1959), a carboxylate ester having an ethylene oxide ring, which is prepared from an acrylate ester and hydrogen peroxide, is reacted with a linear and/or branched, saturated and/or unsaturated diol having 1 to 10 carbon atoms and which may have an ether bond, and further reacted with ethylene oxide and/or propylene oxide, and then subjected to saponification in a conventional method to give the aimed compound; and a method in which polyethylene glycol is reacted with p-toluenesulfonyl chloride, subsequently subjected to nucleophilic addition with methylpolyethylenemalonic acid methyl or ethyl ester having 6-17 carbon atoms at a reaction temperature of 70 °C in the absence of a solvent, and then to saponification and decarboxylation by a conventional method.

An example of methods for preparing the aforementioned carboxylate anion (A2) is a method in which 1,6-dicyclohexane is subjected to nucleophilic addition reaction with polyoxyethylenemalonic acid methyl or ethyl ester of a polymerization degree of 1-4 at a reaction temperature of 70 °C in the absence of a solvent, then to saponification and decarboxylation by a conventional method.

The aforementioned carboxylate anion (A2) may also be obtained by another method, e.g., in which polyethylene glycol is reacted with p-toluenesulfonyl chloride, then subjected to nucleophilic displacement reaction with alkylmalonic acid methyl or ethyl ester having 6-17 carbon atoms at a reaction temperature of 70 °C in the absence of a solvent, and to saponification and decarboxylation by a conventional method.

The carboxylic acid (A0) is the protonated form of the corresponding carboxylic anion (A). From a viewpoint

of reactivity with solvent molecules and solubility in the solvent, preferred carboxylic acid (A0) is a secondary dicarboxylic acid, and especially preferred is a secondary dicarboxylic having a hydrophilic group such as a hydroxyl group or an ether bond in the molecule. More specifically, it is the protonated form of what is represented above by the general formula (1)(A1) or the general formula (2)(A2).

Examples of the carboxylate salt (B) include ammonium salts and amine salts of the carboxylic acid (A0).

Examples of amines (bases) which form the amine salts include primary amines (methylamine, ethylamine, ethylenediamine, etc.), secondary amines (dimethylamine, diethylamine, etc.), and tertiary amines [trimethylamine, triethylamine, dimethylethylamine, dimethylisopropylamine, 1,8-diazabicyclo(5,4,0)-undecene-7, etc.]. Among those, preferred are ammonium salts and triethylamine salts, and particularly preferred are ammonium salts.

The molar ratio of the carboxylate group (A) to ammonium group which form carboxylate salts (B) is preferably (1:2)-(1:0.5), and more preferably (1:1.2)-(1:0.8).

Examples of organic polar solvents (C) used in the electrolytic solution for electrolytic capacitors of the present invention include one or more solvents selected from alcohols, ethers, amides, lactones, nitriles, carbonates, and other organic polar solvents.

Specific examples of organic polar solvents (C) include the following:

(1) Alcohols;

Monovalent alcohols; monovalent alcohols having 1-6 carbon atoms (methyl alcohol, ethyl alcohol, propyl alcohol, butyl alcohol, diacetone alcohol, furfuryl alcohol, etc.), and monovalent alcohols having not less than 7 carbon atoms (benzyl alcohol, octanol, etc.),

Divalent alcohols; divalent alcohols having 1-6 carbon atoms (ethylene glycol, propylene glycol, diethylene glycol, hexylene glycol, etc.), and divalent alcohols having not less than 7 carbon atoms (octylene glycol, etc.),

Trivalent alcohols; trivalent alcohols having 1-6 carbon atoms (glycerol, etc.),

Quadrivalent to sexivalent alcohols or alcohols having more valences; quadrivalent to sexivalent alcohols, or alcohols having more valences, having 1-6 carbon atoms (hexitol, etc.),

(2) Ethers;

Monoethers (ethylene glycol monomethyl ether, ethylene glycol monoethyl ether, diethylene glycol monomethyl ether, diethylene glycol monoethyl ether, ethylene glycol monophenyl ether, tetrahydrofuran, 3-methyltetrahydrofuran, etc.), diethers (ethylene glycol dimethyl ether, ethylene glycol diethyl ether, diethylene glycol dimethyl ether, diethylene glycol diethyl ether, etc.), etc.,

(3) Amides;

Formamides (N-methylformamide, N,N-dimethylformamide, N-ethylformamide, N,N-diethylformamide, etc.), acetamides (N-methylacetamide, N,N-dimethylacetamide, N-ethylacetamide, N,N-diethylacetamide, etc.), propionamides (N,N-dimethylpropionamide, hexamethylphosphorylamide, etc.), oxazolidinones (N-methyl-2-oxazolidinone, 3.5-dimethyl-2-oxazolidinone, etc.).

(4) Lactones;

α-acetyl-γ-butyrolactone, β-butyrolactone, γ-valerolactone, δ-valerolactone, etc.

(5) Nitriles;

Acetonitrile, acrylonitrile, etc.

(6) Carbonates;

Ethylene carbonate, propylene carbonate, etc.

(7) Other organic polar solvents;

Dimethylsulfoxide, sulfolane, 1,3-dimethyl-2-imidazolidinone, N-methylpyrrolidone, etc.

Among those enumerated above, more preferred are divalent alcohols having 1-6 carbon atoms (ethylene glycol, propylene glycol, diethylene glycol, hexylene glycol, etc.), and still more preferred is ethylene glycol.

The weight content of the organic polar solvent (C) is preferably 5-95 % by weight relative to the total weight of the electrolytic solution, more preferably 30-95 % by weight, and most preferably 60-95 % by weight.

When required, a non-polar solvent such as an aromatic solvent (toluene, xylene, etc.), and a paraffinic solvent (normal paraffin, isoparaffin) may be concomitantly used, along with an organic polar solvents (C) enumerated above, as a solvent used for the electrolytic solution for electrolytic capacitors.

The content of such a non-polar solvent is preferably not more than 20 % by weight of the total weight of the electrolytic solution.

When required, water may be included in the electrolytic solution for electrolytic capacitors. The content is not more than 10 % by weight of the total weight of the electrolytic solution.

As the ionic complex (D) formed from the carboxylate anion (A) and aluminum ion, particularly preferred is one represented by the formula (3) or (4).

The ionic complexes (D) shown above are hypothetical compounds used for the calculation of the energy of

formation in water. The carboxylic acid (A0) and/or carboxylate salt (B) dissolved in the organic polar solvent (C) are considered to from, through a reaction with aluminum in the electrolytic capacitor, an ionic complex (D) with aluminum ion.

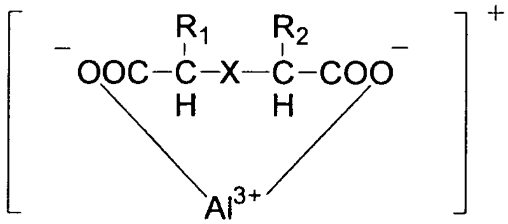

(3)

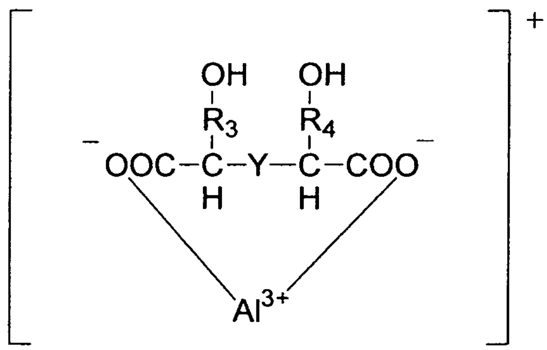

(4)

The total weight of the carboxylic acid (A0) and/or carboxylate salt (B) is preferably 1-70 % by weight relative to the total weight of the electrolytic solution, and more preferably 5-40 % by weight.
When required, a variety of additives that are commonly used in electrolytic solutions may be added to the electrolytic solution of the present invention.
Examples of such additives include phosphoric acid derivatives (e.g., phosphoric acid, phosphate esters, etc.), boric acid derivatives (e.g., boric acid, complexes of boric acid and a polysaccharide (such as mannitol, sorbitol, etc.), complexes of boric acid and a polyol (ethylene glycol, glycerol, etc.)), nitro compounds (e.g., o-nitrobenzoic acid, p-nitrobenzoic acid, m-nitrobenzoic acid, o-nitrophenol, p-nitrophenol, etc.), etc.
When required, a small amount of carboxylic acid having a primary carboxyl group or a carboxylic acid having an aromatic carboxyl group may be admixed to improve performance for coating film formation by anodic oxidation or for additional improvement of the specific electric conductivity. Examples of those which can be admixed include adipic acid, azelaic acid, 1,6-decanedicarboxylic acid, 2-butylhexanedioic acid, benzoic acid, etc.
The total amount of additives mentioned above is preferably not more than 10 % by weight of the total weight of the carboxylic acid (A0) and the carboxylate salt (B).
The pH of the electrolytic solution of the present invention is preferably 3-12, more preferably 5-10.
In preparing the polycarboxylic acid salt (B), conditions are selected so that the pH of the electrolytic solution will fall within the above ranges. Herein, the pH of the electrolytic solution is the value measured of the electrolytic stock solution at 25 °C.
The electrolytic solution of the present invention is used for electrolytic capacitors, preferably for electrolytic capacitors of moderate/high voltage classes having spark voltages of 100 V or more.

[Examples]

The present invention will be described in further detail below with reference to examples. The present invention, however, is not limited to those examples.

Preparation Example 1

[Preparation of carboxylate ester having an epoxy ring]

344 g (4 mol) of methyl acrylate, 478 g (4.2 mol) of 30 % hydrogen peroxide and 23.2 g of sodium tungstate were charged in a 2-liter four-necked flask equipped with a rectification column, and reaction was allowed for 2 hours at 70 °C with stirring. Subsequent rectification gave 285.6 g of (E-1) represented by the following formula.

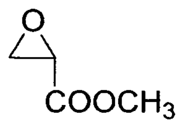

(E-1)

Example 1

118 g (1 mol) of 1,6-hexanediol and 12.1 g of boron trifluoride were charged in a 1-liter autoclave. After heating to 65 °C, 210.1 g (2.06 mol) of the aforementioned (E-1) was added dropwise over 8 hours, and then 90.6 g (2.06 mol) of ethylene oxide was added dropwise over 8 hours. Extraction of the reaction mixture with ethyl ether, followed by treatment with 10 N potassium hydroxide and then with 6 N hydrochloric acid, gave 170.4 g of the dicarboxylic acid (A0-1) represented by the following formula. 18.36 g (0.05 mol) of (A0-1) thus obtained was dissolved in 80 g of ethylene glycol, and purged with ammonia gas. Termination of purging when neutrality was reached gave a 100-g solution of the ammonium dicarboxylate (B-1).

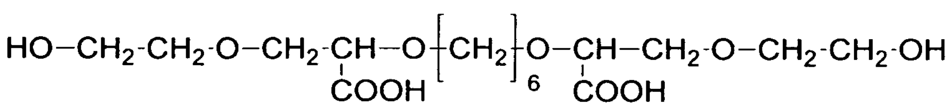

(A0-1)

Example 2

The same procedure was followed as in Example 1 except that 76 g of 1,3-propanediol was used in place of 1,6-hexanediol in Example 1, that the amount of ethylene oxide added dropwise was 135.9 (3.09 mol), and that the duration of ethylene oxide dropwise addition was 12 hours. 160.3 g of dicarboxylic acid (A0-2) represented by the formula shown below was thus obtained. 18.18g (0.05 mol) of thus obtained (A0-2) was dissolved in 80 g of ethylene glycol, purged with ammonia gas. Termination of purging when neutrality was reached gave a 100-g solution of the ammonium dicarboxylate (B-2).

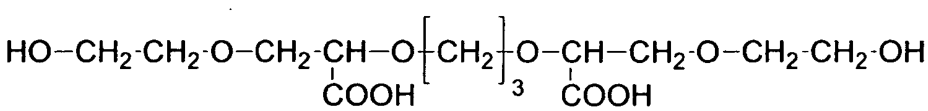

(A0-2)

Preparation Example 2

[Preparation of ditosylated compound from tetraethylene glycol]

193.2 g (1 mol) of tetraethylene glycol and 900 ml of dry pyridine were charged in a 3-liter four-necked flask. A solution of p-toluenesulfonyl chloride dissolved in 600 ml of dry toluene was added dropwise with stirring while keeping the temperature of the content of the flask below 10 °C. Reaction was allowed for 4 hours, and then further 12 hours for maturation at room temperature. The reaction mixture was extracted with toluene, and the extract was washed with 1 N hydrochloric acid and then with 10 % sodium hydroxide aqueous solution. Topping toluene gave 300 g of (E-2) represented by the following formula.

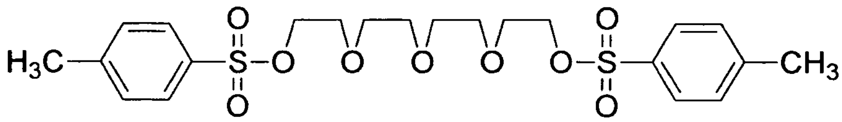

(E-2)

Example 3

To a solution of 216.3 g of diethyl n-butylmalonate dissolved in 700 ml of dry benzene was added a solution of 68.5 g of sodium ethoxide dissolved in 60 ml of dry ethanol in a 3-liter four-necked flask, and reaction was allowed for 15 minutes by heating under reflux. To the reaction liquid was added dropwise over 2 hours a solution of 239.3 g of (E-2) described above dissolved in 300 ml of dry benzene, and reaction was allowed for 12 hours by heating under reflux. The reaction mixture was extracted with ethyl ether, and treated with 10 N potassium hydroxide and then with 6 N hydrochloric acid. Topping ethyl ether gave a tetracarboxylic acid. The tetracarboxylic acid thus obtained was dissolved in pyridine, and decarboxylation by heating under reflux gave the dicarboxylic acid (A0-3) represented by the following formula. 18.33 g (0.05 mol) of the (A0-3) thus obtained was dissolved in 80 g of ethylene glycol, purged with ammonia gas. Termination of purging when neutrality was reached gave a 100-g of a solution of the ammonium dicarboxylate (B-3).

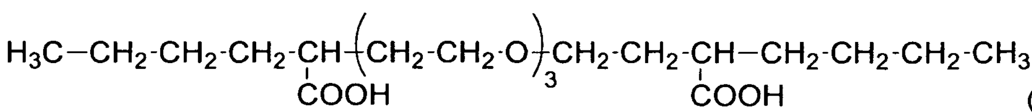

(A0-3)

Example 4

286.5 g of diethyl 2-ethylhexylmalonate and 256.8 g 28 % sodium methoxide solution in methanol, and, separately, 224.1 g of diethyl isopropylmalonate and 249.4 g of 28 % sodium methoxide solution in methanol, were stirred under heating in one and the other of two 1-liter four-necked flasks, respectively. Then, to 171.8 g of dichlorohexane in a 2-liter four-necked flask was added the whole volume of the above-described mixtures of the malonic acid derivatives and sodium methoxide methanol solutions, and reaction was allowed for 22 hours by heating under reflux. The reaction mixture was extracted with toluene and treated with 10 N potassium hydroxide aqueous solution and then with 6 N hydrochloric acid. Removal of the solvent gave a tetracarboxylic acid. Dissolution of the tetracarboxylic acid thus obtained in pyridine and decarboxylation by heating under reflux gave the dicarboxylic acid (A0-4) represented by the following formula. 18.31 g (0.05 mol) of (A0-4) thus obtained was dissolved in 80 g of ethylene glycol and purged with ammonia gas. Termination of purging when neutrality was reached gave a 100-g solution of the ammonium dicarboxylate (B-4).

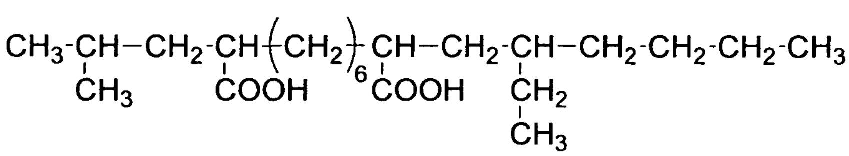

(A0-4)

Example 5

In a 3-liter four-necked flask, the mixture of 383.9 g of diethyl 1-hydroxyhexylmalonate and 331.2 g of 28 % sodium methoxide solution in methanol was heated with stirring. To the mixture liquid was added 114.5 g of dichlorohexane, and reaction was allowed for 17 hours by heating under reflux. The reaction mixture was extracted with ethyl acetate, and treated with 10 N potassium hydroxide aqueous solution and then with 6 N hydrochloric acid. Removal of the solvent gave a tetracarboxylic acid. The tetracarboxylic acid thus obtained was dissolved in pyridine. Decarboxylation by heating under reflux gave the dicarboxylic acid (A0-5) represented by the following formula. 18.43 (0.05 mol) of (A0-5) thus obtained was dissolved in 80 g of ethylene glycol, and purged with ammonia gas. Termination of purging when neutrality was reached gave a 100-g solution of the ammonium dicarboxylate (B-5).

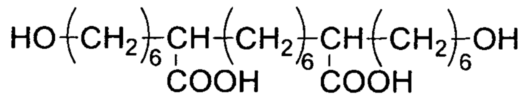

(A0-5)

Preparation Example 3

The tosylated compound (E-3) [represented by the following formula (E-3)] from diethylene glycol mono methyl ether was synthesized in situ. In a 3-liter four-necked flask, a mixture of 610.6 g of diethyl malonate and 1500.2 g of 20 % sodium ethoxide solution in ethanol was heated with stirring. To the mixture liquid was added dropwise the toluene solution of the above-described (E-3). Reaction was allowed for 9 hours by heating under reflux, and the reaction mixture was extracted with ethyl acetate. Removal of the solvent gave the diethyl malonate derivative (E-4) represented by the following formula.

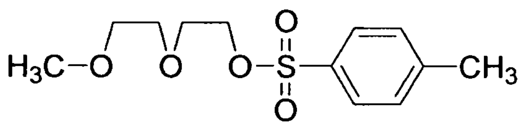

(E-3)

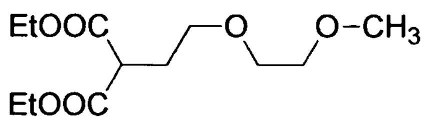

(E-4)

Example 6

In a 2-liter four-necked flask, a mixture of 432.3 g of the above-described (E-4) and 421.0 g of 20 % sodium ethoxide solution in ethanol was heated with stirring. To the mixture solution was added dropwise 115.1 g of dichlorohexane, and reaction was allowed for 36 hours by heating under reflux. The reaction mixture was extracted with ethyl acetate, treated with 10 N potassium hydroxide aqueous solution and then with 6 N hydrochloric acid. Removal of the solvent gave a tetracarboxylic acid. The tetracarboxylic acid thus obtained was dissolved in pyridine. Decarboxylation by heating under reflux gave the dicarboxylic acid (A0-6) represented by the following formula. 18.45 g (0.05 mol) of (A0-6) thus obtained was dissolved in 80 g of ethylene glycol, and purged with ammonia gas. Termination of purging when neutrality was reached gave a 100-g solution of the dicarboxylic acid (B-6).

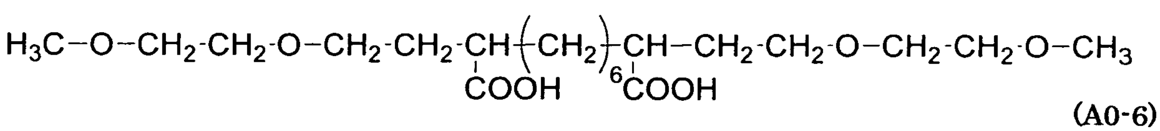

(A0-6)

Preparation Example 4

The tosylated compound (E-5) [represented by the following formula (E-5)] from diethylene glycol monophenyl ether was synthesized in situ. In a 3-liter four-necked flask, a mixture of 610.6 g of diethyl malonate and 1500.2 g of 20 % sodium ethoxide solution in ethanol was heated with stirring. To the mixture liquid was added dropwise a toluene solution of the above-described (E-5). Reaction was allowed for 9 hours by heating under reflux, and the reaction mixture was extracted with ethyl acetate. Removal of the solvent gave the diethyl malonate derivative (E-6) represented by the following formula.

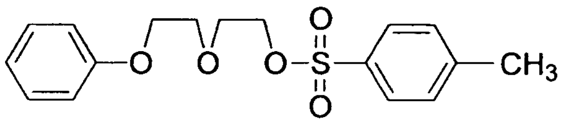

(E-5)

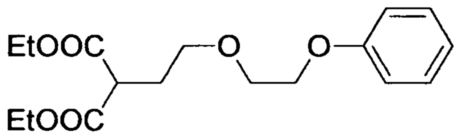

(E-6)

Example 7

In a 2-liter four-necked flask, the mixture of 534.6 g of the above-described (E-6) and 421.0 g of 20 % sodium ethoxide solution in ethanol was heated with stirring. To the mixture liquid was added dropwise 115.1 g of dichlorohexane. Reaction was allowed for 36 hours by heating under reflux. The reaction mixture was extracted with ethyl acetate, and treated with 10 N potassium hydroxide aqueous solution and then with 6 N hydrochloric acid. Removal of the solvent gave a tetracarboxylic acid. The tetracarboxylic acid thus obtained was dissolved in pyridine. Decarboxylation by heating under reflux gave dicarboxylic acid (A0-7) of Example 7 represented by the following formula. 18.79 g (0.04 mol) of the (A0-7) thus obtained was dissolved in 80 g of ethylene glycol, and purged with ammonia gas. Termination of purging when neutrality was reached gave a 100-g solution of the ammonium dicarboxylate (B-7).

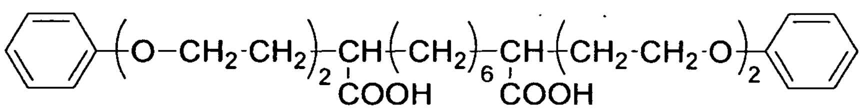

(A0-7)

Comparative Example 1

18.04 (0.06 mol) of the n-octadecane dicarboxylic acid represented by the following formula [manufactured by Tokyo Kasei Kogyo Co., Ltd.] (A0-8') was dissolved in 80 g of ethylene glycol, and purged with ammonia gas. Termination of purging when neutrality was reached gave a 100-g solution of the ammonium dicarboxylate (B-8').

$$HOOC\left(CH_2\right)_{16}COOH$$ (A0-8')

Comparative Example 2

To a solution of 216.3 g of diethyl methylmalonate dissolved in 700 ml of dry benzene was added a solution of 68.5 g of sodium ethoxide dissolved in 60 ml of dry ethanol. Reaction was allowed for 15 minutes by heating under reflux. To the reaction liquid was added dropwise over 2 hours a solution of 116.2 g of 1,6-dibromohexane dissolved in 190 ml of dry benzene. Reaction was allowed for 12 hours by heating under reflux. Extraction of the reaction mixture with ethyl ether, which was followed by treatment with 10 N potassium hydroxide and then with 6 N hydrochloric acid, gave a tetracarboxylic acid. Dissolution of the thus obtained tetracarboxylic acid in pyridine, followed by decarboxylation by heating under reflux, gave 2,9-dimethylsebacic acid (A0-9') represented by the following formula. 17.42 (0.08 mol) of 2,9-dimethylsebacic acid (A0-9') thus obtained was dissolved in 80 g of ethylene glycol, and purged with ammonia gas. Termination of purging when neutrality was reached gave a 100-g solution of the ammonium dicarboxylate (B-9').

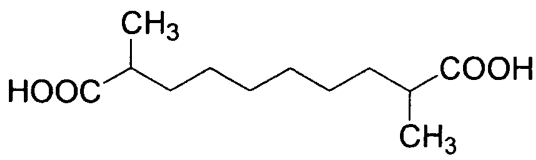

(A0-9')

Calculation of Physicochemical Parameters of Carboxylate Anions

Van der Waals volume was calculated for the carboxylate anions (A) of the above-described Examples and Comparable Examples using the MM3/PM3 method of the CAChe system. The results are shown in Table 1.

The solubility parameter of the carboxylate anions (A) and that of the organic polar solvents (C), which are calculated by the Fedors method, are shown in Table 1 along with the modulus of the difference between them.

The maximal value of electron density of the highest occupied molecular orbital for the carboxylate anions (A) calculated by the MM3/PM3 method of the CAChe system is shown in Table 1.

The value of energy of formation for the ionic complexes (D) from the carboxylate anions (A) and aluminum ion calculated by the MM3/PM3 method of the CAChe system is shown in Table 1.

Measurement of Specific Electric Conductivity and Spark Voltage for Electrolytic Solutions

Measurement was made for the specific electric conductivity and the spark voltage for the electrolytic solutions of Examples 1-7 [(B-1)-(B-7), respectively] and for the electrolytic solutions of Comparative Examples 1-2 [(B-8')-(B-9'), respectively] by the following methods. The results are shown in Table 1.

Specific Electric Conductivity: The specific electric conductivity was measured at 30 °C using an electric conductivity meter CM-40S manufactured by Toa Denpa K.K.

Spark Voltage: Discharge voltage was measured for the electrolytic solutions using an etched and anodically oxidized aluminum foil for high-voltages of a size of 10 $cm^2$ and applying a constant current (2 mA).

## Table 1

| | Van der Vaals volume of (A) | Solubility parameter of (A) | Solubility parameter of (C) | Modulus of difference between (A) and (C) | Maximal value of density of the highest occupied orbital of (A) | Formation energy of (D) | Specific electric conductivity | Spark voltage |
|---|---|---|---|---|---|---|---|---|
| | (Angstrom$^3$) | ($cal^{1/2}cm^{-3/2}$) | ($cal^{1/2}cm^{-3/2}$) | ($cal^{1/2}cm^{-3/2}$) | | (kcal/mol) | (mS/cm) | (V) |
| Example 1 | 230.6 | 12.8 | 17.8 | 5.0 | 0.16 | -393.3 | 1.4 | 508 |
| Example 2 | 193.5 | 13.5 | 17.8 | 4.3 | 0.17 | -434.1 | 1.4 | 509 |
| Example 3 | 278.2 | 10.0 | 17.8 | 7.8 | 0.32 | -273.8 | 1.3 | 504 |
| Example 4 | 264.9 | 9.6 | 17.8 | 8.2 | 0.08 | -262.2 | 0.9 | 538 |
| Example 5 | 286.8 | 11.7 | 17.8 | 6.1 | 0.13 | -302.2 | 1.1 | 516 |
| Example 6 | 274.6 | 10.0 | 17.8 | 7.8 | 0.16 | -264.2 | 1.0 | 510 |
| Example 7 | 262.8 | 10.6 | 17.8 | 7.2 | 0.16 | -305.5 | 1.0 | 578 |
| Comparative example 1 | 228.9 | 10.1 | 17.8 | 7.7 | 0.11 | -216.0 | 0.9 | 476 |
| Comparative example 2 | 154.5 | 10.5 | 17.8 | 7.3 | 0.04 | -184.0 | 1.3 | 436 |

As evident from Table 1, the electrolytic solutions of Examples 1-7 of the present invention generate spark voltages that are higher than those generated with the electrolytic solutions of Comparative Examples 1-2.

INDUSTRIAL APPLICABILITY

As the electrolytic solution of the present invention for electrolytic capacitors allows to generate higher spark voltages without inducing decrease in the specific electric conductivity, it is of great industrial applicability, for its use in electrolytic capacitors, especially of moderate/high voltage classes, will realize space-saving around installed capacitors together with higher reliability of capacitors.

## Claims

1. An electrolytic solution comprising an organic polar solvent (C) and further comprising a carboxylic acid (A0) and/or a carboxylate salt (B), wherein the carboxylate anion (A) is one with which the energy of formation in water of the ionic complex (D) with aluminum ion is not more than -250 kcal/mol and not less than -500 kcal/mol as calculated by the MM3/PM3 method of the CAChe system.

2. The electrolytic solution of claim 1 wherein the van der Waals volume of the carboxylate anion (A) is not less than 190 cubic angstroms and not more than 500 cubic angstroms.

3. The electrolytic solution of claim 1 or 2 wherein the modulus of the difference between the solubility parameter as calculated by Fedors method for the carboxylate anion (A) and the solubility parameter for the organic polar solvent (C) is not less than 4 and not more than 9.

4. The electrolytic solution of one of claims 1 to 3 wherein the maximal electron density of the highest occupied orbital of the molecule of the carboxylate anion (A), as calculated by the MM3/PM3 method of the CAChe system, is not less than zero and not more than 0.5.

5. The electrolytic solution of one of claims 1 to 4 wherein the carboxylate anion (A) is a secondary dicarboxylate dianion.

6. The electrolytic solution of one of claims 1 to 5 wherein the carboxylate anion (A) is represented by the following general formula (1)

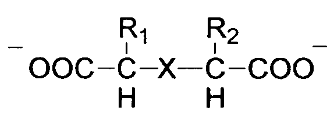

(1)

wherein X is a linear or branched, saturated or unsaturated, divalent hydrocarbon group having 1 to 12 carbon atoms, and may have an ether bond,

$R_1$ and $R_2$ are linear or branched, saturated or unsaturated, monovalent hydrocarbon groups having 2 to 10 carbon atoms wherein $R_1$ and $R_2$ are different from each other, or $R_1$ and $R_2$ are monovalent hydrocarbon groups having an ether bond and having 2 to 10 carbon atoms wherein $R_1$ and $R_2$ may be the same or different from each other, or

by the following general formula (2)

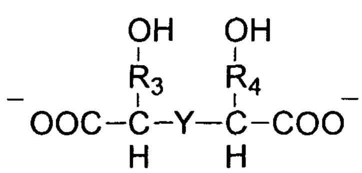

(2)

wherein Y is a linear or branched, saturated or unsaturated, divalent hydrocarbon group having 1 to 12 carbon

atoms, and may have an ether bond,

$R_3$ and $R_4$ are linear of branched, saturated or unsaturated, divalent hydrocarbon groups having 2 to 10 carbon atoms, and may have an ether bond, wherein $R_3$ and $R_4$ may be the same or different from each other.

**7.** The electrolytic solution of one of claims 1 to 6 wherein the ionic complex (D) formed from the carboxylate anion (A) and aluminum ion is represented by the following general formula (3),

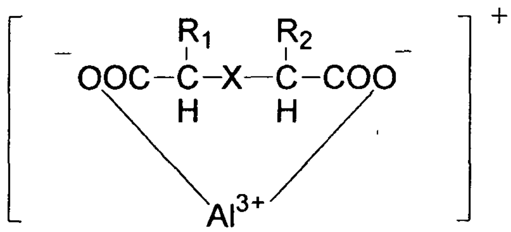

(3)

wherein X is a linear or branched, saturated or unsaturated, divalent hydrocarbon group having 1 to 12 carbon atoms, and may have an ether bond,

$R_1$ and $R_2$ are linear or branched, saturated or unsaturated, monovalent hydrocarbon groups having 2 to 10 carbon atoms wherein $R_1$ and $R_2$ are different from each other, or $R_1$ and $R_2$ are monovalent hydrocarbon groups having an ether bond and having 2 to 10 carbon atoms wherein $R_1$ and $R_2$ may be the same or different from each other, or

by the general formula (4),

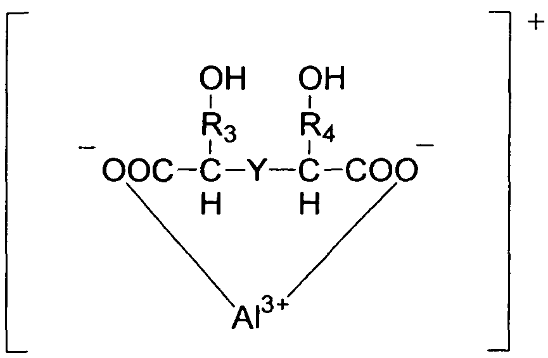

(4)

wherein Y is a linear or branched, saturated or unsaturated, divalent hydrocarbon group having 1 to 12 carbon atoms, and may have an ether bond,

$R_3$ and $R_4$ are linear of branched, saturated or unsaturated, divalent hydrocarbon groups having 2 to 10 carbon atoms, and may have an ether bond, wherein $R_3$ and $R_4$ may be the same or different from each other.

**8.** The electrolytic solution of one of claims 1 to 7 wherein the carboxylate salt (B) is an ammonium salt and/or an amine salt.

**9.** The electrolytic solution of one of claims 1 to 8 wherein the organic polar solvent (C) is ethylene glycol.

**10.** The electrolytic solution of one of claims 1 to 9 to be used in an electrolytic capacitor.

**INTERNATIONAL SEARCH REPORT**

International application No. PCT/JP03/10475

A. CLASSIFICATION OF SUBJECT MATTER

Int.Cl[7] H01G9/035

According to International Patent Classification (IPC) or to both national classification and IPC

B. FIELDS SEARCHED

Minimum documentation searched (classification system followed by classification symbols)

Int.Cl[7] H01G9/035

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 1-103821 A (Matsushita Electric Industrial Co., Ltd.), 20 April, 1989 (20.04.89), Full text; all drawings (Family: none) | 1-10 |
| A | JP 6-302475 A (Sanyo Chemical Industries, Ltd.), 28 October, 1994 (28.10.94), Full text; all drawings (Family: none) | 1-10 |
| A | JP 6-84705 A (Sanyo Chemical Industries, Ltd.), 25 March, 1994 (25.03.94), Full text; all drawings (Family: none) | 1-10 |

☐ Further documents are listed in the continuation of Box C. ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 13 November, 2003 (13.11.03) | 25 November, 2003 (25.11.03) |
| Name and mailing address of the ISA/ Japanese Patent Office | Authorized officer |
| Facsimile No. | Telephone No. |

Form PCT/ISA/210 (second sheet) (July 1998)